# EUROPEAN PATENT APPLICATION

(11) **EP 2 077 446 A1**
(43) Date of publication of application: **08.07.2009**
(21) Application number: 06811747.2
(22) Date of filing: 13.10.2006
(51) Int. Cl.: G01N 21/77

(54) **METHOD OF DETERMINING ABNORMALITY AND ANALYZER**

(71) Applicant: Olympus Corporation, Shibuya-ku Tokyo 151-0072 (JP)
(72) Inventor: KUBOTA, Kiyotaka, Shibuya-ku Tokyo 151-0072 (JP); FURUSAWA, Yukihiro, Shibuya-ku Tokyo 151-0072 (JP); FUJIMORI, Koji, Shibuya-ku Tokyo 151-0072 (JP)
(74) Representative: von Hellfeld, Axel
(86) International application number: PCT/JP2006/320469
(87) International publication number: WO 2008/044313

(57) **Abstract**

According to the present invention, all predetermined analysis processes to be performed on a specimen but an analysis process whose abnormality is to be examined are eliminated, and an abnormality of an analyzer is identified based on a measurement result obtained through the analysis process whose abnormality is to be examined and a reaction process in which a substance whose abnormality is to be identified or a predetermined reagent is reacted with a predetermined reactant, whereby the abnormality of the analyzer can be identified properly and easily. In the present invention, a liquid injection system injects a predetermined amount of the substance whose abnormality is to be identified or a predetermined amount of the reagent into a reaction vessel, and injects a reactant which is reacted with the substance whose abnormality is to be identified or with the reagent to thereby make the substance whose abnormality is to be identified or the reagent show predetermined optical characteristics. Then, a reaction liquid in the reaction vessel is optically measured to obtain a measurement result. When the measurement result is not within acceptable range determined based on a measurement result previously obtained by the analyzer which functions normally, it is determined that there is an abnormality in the substance whose abnormality is to be identified or the liquid injection system.

## Description

### TECHNICAL FIELD

The present invention relates to identification of an abnormality in an analyzer which analyzes a specimen based on optical measurement.

### BACKGROUND ART

An automatic analyzer can analyze a number of specimens at the same time, and further, can analyze many components immediately and accurately. The automatic analyzer is used for various tests such as an immunological test, a biochemical test, and a blood-transfusion test. For example, the analyzer which performs the immunological test includes a reaction system in which the specimen is reacted with a reagent in a reaction vessel, a system in which unreacted substances are removed out of the reaction vessel, and a detection system in which light emission from an immune complex obtained through reaction between the specimen and each reagent is detected. These systems are arranged on plural turntables, respectively. The analyzer further includes plural dispense/transfer systems which dispense or transfer the specimen, the reagent, or a reaction liquid into each of the systems. The analyzer performs immunological tests for various contents of the analysis (e.g., see Patent Document 1).

Patent Document 1: Japanese Patent Application Laid-open No. 2003-83988

### DISCLOSURE OF INVENTION

### PROBLEM TO BE SOLVED BY THE INVENTION

Conventionally, the abnormality of the analyzer has been examined as follows. The analyzer performs a series of analysis processes, which are to be performed on an actual specimen, on a reference specimen with which a known analysis result should be produced, and then it is checked whether the analysis result produced by the analyzer is consistent with the known result. In other words, conventionally, when the analysis result obtained from the actual analysis of the reference specimen is consistent with the known analysis result, an operator of the analyzer determines that the analyzer functions normally whereas when the analysis result obtained from the actual analysis of the reference specimen is inconsistent with the known analysis result, the operator determines that the analyzer functions abnormally.

In the conventional method with the reference specimen, however, the operator can determine that there is an abnormality in the analyzer, but can hardly know which process or system of the analyzer exactly causes the abnormality. Especially, it is difficult to properly identify the abnormality in the analyzer which performs the immunological test, since the analyzer of the kind has a complex configuration in which various factors such as reaction time, a reagent to be used, a system to be used, and a timing to use the system are different depending on the contents of the analysis processes. Further, conventionally, dispense accuracy of the dispense/transfer system is examined by dispensing the reagent which has predetermined absorbance characteristics into the reaction vessel, and referring to a measurement result obtained through a colorimetric method. The analyzer which performs the immunological test, however, does not include a colorimetric measurement unit. Therefore, to examine the dispense accuracy, the operator needs to perform the colorimetric measurement using a spectral photometer which is not included in the analyzer.

The present invention is made in view of the above problems of the conventional technology, and an object of the present invention is to provide an abnormality-identifying method, an analyzer, and a reagent which can identify an abnormality of an analyzer properly and easily.

### MEANS FOR SOLVING PROBLEM

In order to solve the problem above and achieve an object of the present invention, in an abnormality-identifying method according to the present invention for identifying an abnormality of an analyzer which analyzes a specimen based on optical characteristics, all predetermined analysis processes to be performed on the specimen but an analysis process whose abnormality is to be examined are eliminated; and the abnormality of the analyzer is identified based on a measurement result which is obtained through the analysis process whose abnormality is to be examined and a reaction process in which a substance whose abnormality is to be identified or a predetermined reagent is reacted with a predetermined reactant.

The abnormality-identifying method according to the present invention further includes: a first injection step of injecting a predetermined amount of the substance whose abnormality is to be identified or a predetermined amount of the reagent into a reaction vessel by a liquid injection system; a second injection step of injecting the reactant which is then reacted with the substance whose abnormality is to be identified or the reagent, to thereby make the substance whose abnormality is to be identified or the reagent show predetermined optical characteristics; a measuring step of optically measuring a reaction liquid in the reaction vessel; and an identifying step of determining that there is an abnormality in the substance whose abnormality is to be identified or the liquid injection system when a measurement result of the measurement step is not within acceptable range determined based on the measurement result previously obtained by the analyzer which functions normally.

In the abnormality-identifying method according to the present invention, in the first injection step, the substance whose abnormality is to be identified, i.e., a liquid which is, when degenerated, shows abnormal light emission when reacted with the reactant is injected; in the measurement step, the abnormal light emission resulting from the reaction between the substance whose abnormality is to be identified and the reactant injected in the second injection step is detected; and in the identifying step, it is determined that the substance whose abnormality is to be identified is degenerated when the abnormal light emission is detected in the measurement step.

In the abnormality-identifying method according to the present invention, in the first injection step, the reagent which emits light when reacted with the reactant is injected; in the measurement step, the light-emission amount from the reagent which is reacted with the reactant injected in the second injection step is measured; and in the identifying step, it is determined that there is an abnormality in the liquid injection system when the light-emission amount measured in the measurement step is not within the acceptable range.

In the abnormality-identifying method according to the present invention, in the identifying step, contents of the abnormality in the liquid injection system are identified based on an average value and a dispersion value of the light-emission amount which are obtained by repeating the first injection step, the second injection step, and the measurement step plural times.

In an analyzer according to the present invention which analyzes a specimen based on optical characteristics, all predetermined analysis processes to be performed on the specimen but an analysis process whose abnormality is to be examined are eliminated; and the abnormality of the analyzer is identified based on a measurement result which is obtained through the analysis process whose abnormality is to be examined and a reaction process in which a substance whose abnormality is to be identified or a predetermined reagent is reacted with a predetermined reactant.

The analyzer according to the present invention further includes: a first injection unit which injects a predetermined amount of the substance whose abnormality is to be identified or a predetermined amount of the reagent into the reaction vessel; a second injection unit which injects the reactant which is reacted with the substance whose abnormality is to be identified or with the reagent to thereby make the substance whose abnormality is to be identified or the reagent show predetermined optical characteristics; a measurement unit which optically measures the reaction liquid in the reaction vessel; and the identifying unit which determines that there is an abnormality in the substance whose abnormality is to be identified or in the liquid injection system when the measurement result from the measurement unit is not within the acceptable range determined based on the measurement result previously obtained by the analyzer which functions normally.

In the analyzer according to the present invention, the first injection unit injects the substance whose abnormality is to be identified, i.e., the liquid which is, when degenerated, reacted with the reactant and causes abnormal light emission; the measurement unit detects the abnormal light emission of the substance whose abnormality is to be identified which is reacted with the reactant injected by the second injection unit; and the identifying unit determines that the substance whose abnormality is to be identified is degenerated when the abnormal light emission is detected by the measurement unit.

In the analyzer according to the present invention, the first injection unit injects the reagent which emits light when reacted with the reactant; the measurement unit measures an amount of the light emission emitted from the reagent which is reacted with the reactant injected by the second injection unit; and the identifying unit determines that there is an abnormality in the first injection unit when the amount of light emission measured by the measurement unit is not within the acceptable range.

In the analyzer according to the present invention, the identifying unit identifies contents of the abnormality in the first injection unit based on the average value and the dispersion value of the light-emission amount which are obtained by repeating each process of the first injection unit, the second injection unit, and the measurement unit plural times.

### EFFECT OF THE INVENTION

According to the present invention, all predetermined analysis processes to be performed on the specimen but an analysis process whose abnormality is to be examined are eliminated. Then, an abnormality of an analyzer is identified based on a measurement result obtained through the analysis process whose abnormality is to be examined and a reaction process in which a substance whose abnormality is to be identified or a predetermined reagent is reacted with a predetermined reactant, whereby the abnormality of the analyzer can be identified properly and easily.

### BRIEF DESCRIPTION OF DRAWINGS

FIG. 1 is a schematic diagram of a configuration of an analyzer according to an embodiment;
FIG. 2 is a flowchart of a procedure of an abnormality-identifying process of the analyzer shown in FIG. 1;
FIG. 3 shows the procedure of the abnormality-identifying process shown in FIG. 2;
FIG. 4 is an illustration of a normal analysis shown in FIG. 3;
FIG. 5 is an illustration of an abnormality-identifying measurement process 1 shown in FIG. 3;
FIG. 6 is an exemplary diagram of a table which is used in the abnormality-identifying process shown in FIG. 2;
FIG. 7 is an illustration of another example of the abnormality-identifying measurement process shown in FIG. 2;
FIG. 8 is an illustration of an abnormality-identifying measurement 2A shown in FIG. 7;
FIG. 9 is an illustration of an abnormality-identifying measurement 2B shown in FIG. 7;
FIG. 10 is an illustration of still another example of the abnormality-identifying measurement process shown in FIG. 2;
FIG. 11 is an illustration of an abnormality-identifying measurement 3 shown in FIG. 10;
FIG. 12 is an illustration of still another example of the abnormality-identifying measurement process shown in FIG. 2;
FIG. 13 is an illustration of the abnormality-identifying measurement 4A shown in FIG. 12;
FIG. 14 is an illustration of the abnormality-identifying measurement 4B shown in FIG. 12;
FIG. 15 is a schematic diagram of another configuration of the analyzer shown in FIG. 1;
FIG. 16 is an illustration of an analysis process of the analyzer shown in FIG. 15;
FIG. 17 is an illustration of the abnormality-identifying measurement process for the analysis process shown in FIG. 16;
FIG. 18 is an illustration of the abnormality-identifying measurement process for the analysis process shown in FIG. 16;
FIG. 19 is an illustration of another example of the analysis process of the analyzer shown in FIG. 15;
FIG. 20 is an illustration of the abnormality-identifying measurement process for the analysis process shown in FIG. 19; and
FIG. 21 is an illustration of the abnormality-identifying measurement process for the analysis process shown in FIG. 19.

### EXPLANATIONS OF LETTERS OR NUMERALS

1, 201 Analyzer
2, 202 Measurement system
4, 204 Control system
20, 20a Cuvette
21, 212 Specimen transfer unit
21a Specimen vessel
21b Specimen rack
22 Chip holder
23, 214 Specimen dispense/transfer system
24 Immune reaction table
24a Outer circular line
24b Middle circular line
24c Inner circular line
25 BF table
26, 211 First-reagent holder
27, 215 Second-reagent holder
28, 212 First-reagent dispense/transfer system
29, 216 Second-reagent dispense/transfer system
30 Enzyme reaction table
31, 218 Photometry system
32 First cuvette transfer system
33 Second cuvette transfer system
41, 241 Control unit
42, 242 Process control unit
43 Input unit
44, 244 Analysis unit
45 Identifying unit
46 Storage unit
47 Output unit
48 Transceiving unit
210 Reaction table
217 Stir system

### BEST MODE(S) FOR CARRYING OUT THE INVENTION

Embodiments of an analyzer according to the present invention which is used in various fields such as biochemical tests and blood-transfusion tests are described below with reference to accompanying drawings, taking as an example an analyzer which performs an immunological test such as an antigen-antibody reaction of tested blood in which magnetic particles are used as solid-phase carriers. These embodiments, however, do not limit the scope of the present invention. Same numerals are attached to same components.

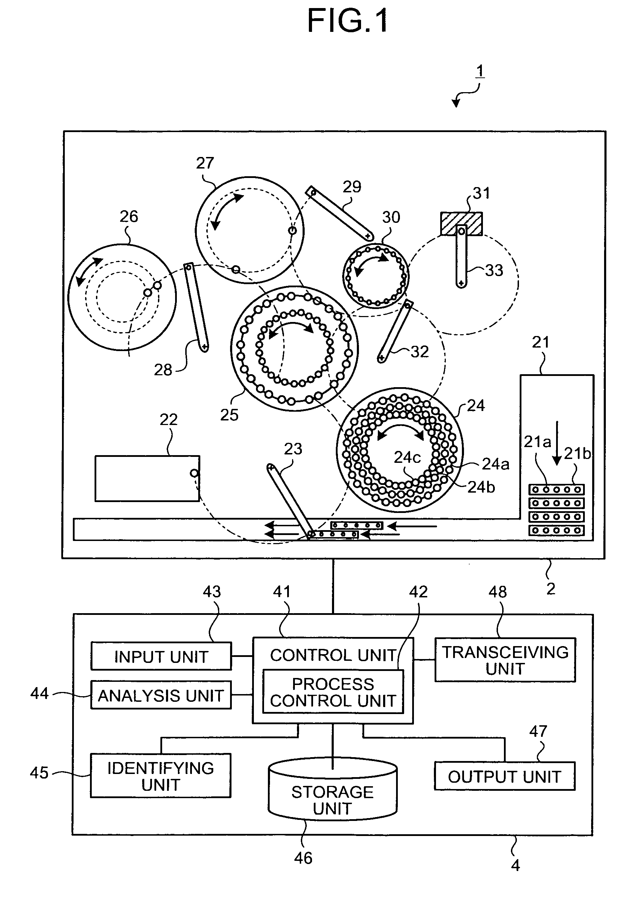

To begin with, the embodiments are described. Described first is a case for identifying whether water, which is used as diluted solution, or a substrate liquid are degenerated or whether there is an abnormality in a dispense/transfer system in an analysis process performed on a specimen. In the embodiment, the degeneration of the water and the substrate liquid or the abnormality of the dispense/transfer system can be identified easily and properly by using a predetermined reagent for identifying the abnormality. FIG. 1 is a schematic diagram of a configuration of the analyzer according to the present embodiment. As shown in FIG. 1, analyzer 1 includes a measurement system 2 which measures light emission from a reaction between a specimen and a reagent, a control system 4 which controls the analyzer 1 as a whole including the measurement system 2 and analyzes a measurement result of the measurement system 2. The analyzer 1 automatically performs an immunological analysis on plural specimens through cooperation of these two systems.

The measurement system 2 includes a specimen transfer unit 21, a chip holder 22, a specimen dispense/transfer system 23, an immune reaction table 24, a BF table 25, a first-reagent holder 26, a second-reagent holder 27, a first-reagent dispense/transfer system 28, a second-reagent dispense/transfer system 29, an enzyme reaction table 30, a photometry system 31, a first-cuvette transfer system 32, and a second-cuvette transfer system 33. Each component of the measurement system 2 includes one or more units which perform a predetermined operation. Further, the control system 4 includes a control unit 41, an input unit 43, an analysis unit 44, an identifying unit 45, a storage unit 46, an output unit 47, and a transceiving unit 48. Each component of the measurement system 2 and the control system 4 is electrically connected with the control unit 41.

The measurement system 2 is described. The specimen transfer unit 21 holds plural specimen vessels 21a which contain specimens, and plural specimen racks 21b which are to be transferred sequentially in a direction along an arrow in the figure. The specimens contained in the specimen vessels 21a are blood, urine, or the like extracted from a donor who provides the specimens.

The chip holder 22 has a chip case in which plural chips are arranged, and the chip is provided out of the case. The chip is a disposal sample chip which is exchanged for each dispensing of the specimen. The chip is mounted on a distal end of a nozzle of the specimen dispense/transfer system 23 so that carryover in measurement of infectious diseases is prevented.

The specimen dispense/transfer system 23 includes an arm which can be moved up and down in vertical directions and rotated around a central axis, i.e., a vertical line crossing a proximal end thereof. A probe for sucking and dispensing the specimen is attached to a distal end of the arm. The specimen dispense/transfer system 23 makes the probe suck the specimen out of the specimen vessel 21a which has been transferred to a predetermined position by the specimen transfer unit 21, rotates the arm to dispense the specimen into a cuvette which has been transferred to a predetermined position by the BF table 25, and thus transfers the specimen into the cuvette on the BF table 25 at a predetermined timing.

The immune reaction table 24 includes reaction lines where the specimen is reacted with a predetermined reagent corresponding to an analysis point in each of the arranged cuvettes. The immune reaction table 24 can be rotated around a rotation axis, i.e., a vertical line crossing a center of the immune reaction table 24 for each of the reaction lines, and thus the cuvette arranged on the immune reaction table 24 is transferred to a predetermined position at a predetermined timing. As shown in FIG. 1, the immune reaction table 24 may form three reaction lines consisting of an outer circular line 24a for pretreatment and pre-dilution, a middle circular line 24b for the immune reaction of the specimen and a solid-phase carrier reagent, and an inner circular line 24c for the immune reaction of the specimen and a reference specimen.

The BF table 25 performs a BF cleaning process by which a predetermined cleaning fluid is discharged and sucked out to perform the BF (bound-free) separation, i.e., to separate unreacted substances of the specimen or the reagent. The BF table 25 can be rotated around a rotation axis, i.e., a vertical line crossing a center of the BF table 25 for each of the reaction lines, and thus the cuvette arranged on the BF table 25 is transferred to the predetermined position at the predetermined timing. The BF table 25 includes a magnetic collection system which magnetically collects the magnetic-particle carriers used for the BF separation, a BF cleaning nozzle which performs the BF separation, and a stir system which mixes up the carriers magnetically collected.

The first-reagent holder 26 can hold plural reagent vessels which contain the first reagent to be dispensed into the cuvette which is set on the BF table 25. The second-reagent holder 27 can hold plural reagent vessels which contain the second reagent to be dispensed into the cuvette which is set on the BF table 25. Both the first-reagent holder 26 and the second-reagent holder 27 can be rotated in a clockwise and counterclockwise direction by a driving system (not shown) to transfer a desired reagent vessel to a reagent sucking position of the first-reagent dispense/transfer system 28 and the second-reagent dispense/transfer system 29.

The first-reagent dispense/transfer system 28 includes an arm which can be moved up and down in vertical directions and rotated around a central axis, i.e., a vertical line crossing a proximal end thereof. A probe for sucking and dispensing the first reagent is attached to a distal end of the arm. The first-reagent dispense/transfer system 28 makes the probe suck the reagent out of the reagent vessel which has been transferred to a predetermined position by the first-reagent holder 26, and rotates the arm to dispense the reagent into a cuvette which has been transferred to a predetermined position by the BF table 25.

The second-reagent dispense/transfer system 29 is configured similarly to the first-reagent dispense/transfer system 28. The second-reagent dispense/transfer system 29 makes the probe suck the reagent out of the reagent vessel which has been transferred to a predetermined position by the second-reagent holder 27, and rotates the arm to dispense the reagent into the cuvette which has been transferred to a predetermined position by the BF table 25.

The enzyme reaction table 30 is the reaction line in which an enzyme reaction which involves light emission is caused in a cuvette into which the substrate liquid has been dispensed. The photometry system 31 measures the light emission from the reaction liquid in the cuvette. To measure the light-emission amount, the photometry system 31 includes, for example, a photoelectron multiplier tube which detects a faint light emission from chemical luminescence. Further, the photometry system 31 holds an optical filter to lessen intensity of light depending on the intensity of light emission so that the intensity of light emission can be calculated correctly.

The first-cuvette transfer system 32 includes an arm which can be moved up and down in the vertical directions, and rotated around the central axis, i.e., the vertical line crossing the proximal end thereof. The arm transfers the cuvette containing a liquid to the predetermined positions of the immune reaction table 24, the BF table 25, the enzyme reaction table 30, and a cuvette supplying unit (not shown) and a cuvette disposal unit (not shown) at predetermined timing. Further, the second-cuvette transfer system 33 includes an arm which can be moved up and down in the vertical directions, and rotated around the central axis, i.e., the vertical line crossing the proximal end thereof. The arm transfers the cuvette containing the liquid to the predetermined positions of the enzyme reaction table 30, the photometry system 31, and the cuvette disposal unit (not shown) at predetermined timing.

The control system 4 is described. The control system 4 is realized by one or more computer systems, and connected with the measurement system 2. The control system 4 controls the operation processes of the measurement system 2, and analyzes the measurement result of the measurement system 2 by using various programs related to the processes of the analyzer 1.

The control unit 41 includes a CPU and the like which provide a control function, and controls the processes and the operations of the components of the analyzer 1. The control unit 41 performs a predetermined input/output control on information which is input/output to/from each of the components, and performs a predetermined information process on the information. The control unit 41 controls the analyzer 1 by reading out programs from a memory in the storage unit 46. The control unit 41 includes a process control unit 42.

The analyzer 1 eliminates all analysis processes, which are to be performed usually on the specimen, but the analysis process whose abnormality is to be examined, and then identifies the abnormality of the analyzer based on the measurement result obtained through the analysis process whose abnormality is to be examined and a reaction process in which a predetermined reactant is reacted with the water, the substrate liquid or the predetermined reagent. To perform an abnormality-identifying process, the process control unit 42 eliminates all predetermined analysis processes, which are to be performed on the analyzed specimen, but the analysis process whose abnormality is to be examined, and then controls each system to perform the analysis process whose abnormality is to be examined and the reaction process in which the predetermined reactant is reacted with the water, the substrate liquid, or the predetermined reagent.

The input unit 43 is realized by a keyboard for inputting various information, a mouse for specifying an arbitrary position on a display screen of a display included in the output unit 47, and the like. The input unit 43 obtains various types of information for the analysis of the specimen, and instruction information and the like of the analysis operation from an outside. The input unit 43 inputs the instruction information which includes an instruction as to which component of the analyzer is to be examined for the abnormality. The analysis unit 44 performs an analysis process and the like on the specimen based on the measurement result obtained from the measurement system 2.

The identifying unit 45 relates to the analysis process to be performed on the specimen, and identifies whether the liquid used for the analysis process is degenerated. Further, the identifying unit 45 identifies whether there is an abnormality in the dispense/transfer system. The identifying unit 45 obtains the measurement result from the analysis process whose abnormality is to be examined and the reaction process in which the predetermined reactant is reacted with the water, the substrate liquid, or the predetermined reagent. When the obtained measurement result is not within acceptance range determined based on the measurement result previously obtained by the analyzer 1 functioning normally, the identifying unit 45 determines that the liquid to be used for the analysis process is degenerated or that there is an abnormality in the dispense/transfer system.

The storage unit 46 includes a hard disk, which magnetically stores information therein, and a memory, which loads various programs related to a process of the analyzer 1 from the hard disk and electrically stores the programs therein when the analyzer 1 performs the process. Thus, the storage unit 46 stores various types of information including the analysis result and the like of the specimen. The storage unit 46 may include a sub-storage apparatus which can read out information stored in a storage medium such as a CD-ROM, a DVD-ROM, and a PC card.

The output unit 47 includes a display, a printer, speakers, and the like, and outputs various types of information related to the analysis under the control of the process control unit 42. The transceiving unit 48 functions as an interface which transceives information in a predetermined format via a communication network (not shown).

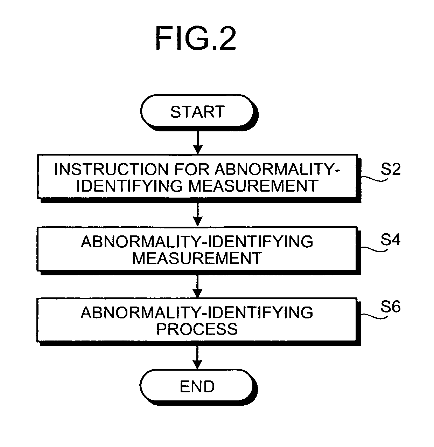

A procedure of the abnormality-identifying process of the analyzer 1 is described with reference to FIG. 2. As shown in FIG. 2, the input unit 43 inputs the instruction information including an instruction as to whether the abnormality of the analyzer 1 is to be examined to the control unit 41. The process control unit 42 controls each system of the measurement system 2 to perform the abnormality-identifying measurement corresponding to a subject to be examined based on the instruction information which is input from the input unit 43 (Step S2). Each system of the measurement system 2 performs the abnormality-identifying measurement as instructed under the control of the process control unit 42 (Step S4). The identifying unit 45 determines whether the measurement result obtained from the abnormality-identifying measurement process is within the acceptable range corresponding to the abnormality-identifying measurement process to thereby identify the abnormality (Step S6). The abnormality-identifying measurement processes are an abnormality-identifying measurement 1 for identifying the degeneration of the substrate liquid, an abnormality-identifying measurement 2A for identifying the degeneration of the water, an abnormality-identifying measurement 2B for identifying the degeneration of the cleaning fluid which is diluted with water, an abnormality-identifying measurement 3 for identifying the abnormality of the specimen dispense/transfer system 23, the abnormality-identifying measurement 4A for identifying the abnormality of the first-reagent dispense/transfer system 28, and an abnormality-identifying measurement 4B for identifying the abnormality of the second-reagent dispense/transfer system 29.

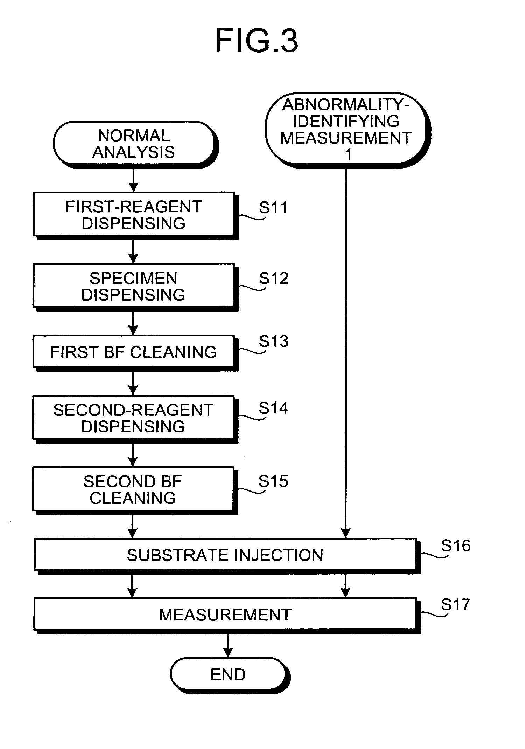

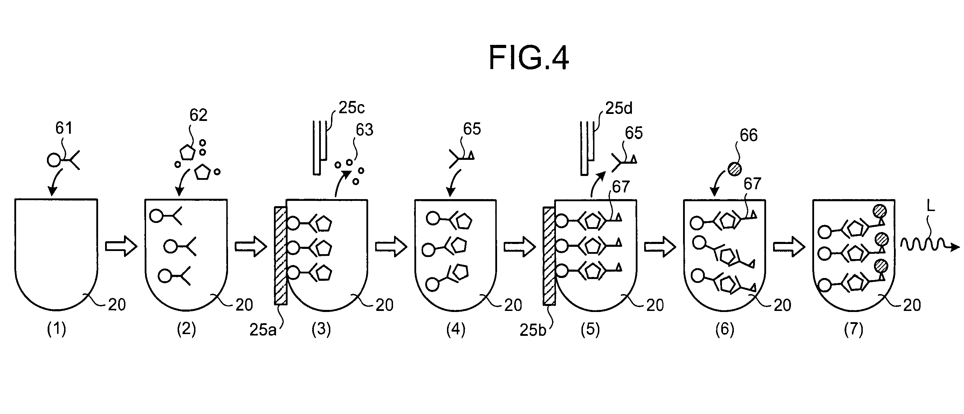

In the abnormality-identifying measurements above, the abnormality-identifying measurement 1 for identifying the degeneration of the substrate liquid is described first with reference to FIGS. 3 to 5. FIG. 3 shows a procedure of the abnormality-identifying measurement 1. FIG. 3 shows a normal analysis which is usually performed on the specimen along with the abnormality-identifying measurement 1. FIG. 4 is an illustration of the normal analysis shown in FIG. 3.

The normal analysis is described. As shown in FIG. 3 and a portion (1) of FIG. 4, in the normal analysis, a cuvette 20 is transferred by the first-cuvette transfer system 32 from the cuvette supplying unit not shown in FIG. 1 to a predetermined position on the BF table 25, where a first-reagent dispense process is performed, i.e., where the first reagent containing magnetic particles 61 is dispensed into the cuvette 20 by the first-reagent dispense/transfer system 28 (Step S11). After that, as shown in (2) of FIG. 4, a specimen dispense process is performed; i.e., a specimen 62 is dispensed into the cuvette 20 on the BF table in a manner such that the specimen dispense/transfer system 23, onto which the chip supplied from the chip holder 22 is mounted, sucks the specimen 62 out of the specimen vessel 21a which has been transferred to the predetermined position by the specimen transfer unit 21 to dispense the specimen 62 into the cuvette 20 (Step S12). The liquid in the cuvette 20 is stirred by the stir system on the BF table 25, and then transferred to a middle circular line 24b on the immune reaction table 24 by the first-cuvette transfer system 32. In this case, the magnetic particles 61 and antigens in the specimen are bound together in certain reaction time, and thus magnetic-particle carriers are generated.

The cuvette 20 is transferred to the BF table 25 by the first-cuvette transfer system 32. As shown in (3) of FIG. 4, the magnetic-particle carriers are collected by a magnetic collection system 25a on the BF table 25, and the BF separation is carried out by the BF cleaning nozzle 25c (Step S13). As a result, as shown in (3) of FIG. 4, unreacted substances 63 are removed out of the cuvette 20.

As shown in (4) of FIG. 4, after the BF separation, a second-reagent dispense process, which dispenses the second reagent into the cuvette 20 by the second-reagent dispense/transfer system 29, is performed and then the liquid in the cuvette 20 is stirred by the stir system (Step S14). The second reagent is a labeled reagent containing a labeled antibody 65. As a result, the magnetic-particle carriers and the labeled antibodies 65 are bound to thereby generate immune complexes 67. Then, the cuvette 20 is transferred to the inner circular line 24c on the immune reaction table 24 by the first-cuvette transfer system 32. After certain reaction time, the cuvette 20 is transferred to the BF table 25.

As shown in (5) of FIG 4, a second BF cleaning process, in which the magnetic-particle carriers are collected by the magnetic collection system 25b and the BF separation is performed by the BF cleaning nozzle 25d, is performed on the cuvette 20 (Step S15). As a result, as shown in (5) of FIG. 4, the labeled antibody 65 which is not bound with the magnetic-particle carrier is removed out of the cuvette 20.

A substrate injection process, which dispenses the substrate liquid containing an enzyme 66 into the cuvette 20 and stirs the liquid in the cuvette 20, is performed (Step S16). Then, the cuvette 20 is transferred by the first-cuvette transfer system 32 to an enzyme reaction table 30. After certain reaction time which is needed for the enzyme reaction, the cuvette 20 is transferred by the second-cuvette transfer system 33 to the photometry system 31. As the enzyme 66 is bound with the immune complex 67 through the enzyme reaction, light L is emitted from the immune complex 67. Then, a measurement process, which measures the light L emitted from the cuvette 20 by the photometry system 31, is performed (Step S17). In the normal analysis, in order to detect how much antigen to be analyzed is included in the specimen, after the antigen is bound with the magnetic particles, the labeled antibody is bound with the magnetic-particle carrier to generate the immune complex. The immune complex is reacted with the enzyme to generate light. The analysis unit 44 obtains the amount of the antigen by measuring the amount of the generated light.

As described, the normal analysis process, which is performed on the specimen, involves the first-reagent dispense process (Step S11), the specimen dispense process (Step S12), the first BF cleaning process (Step S13), the second-reagent dispense process (Step S14), the second BF cleaning process (Step S15), the substrate injection process (Step S16), and the measurement process (Step S17).

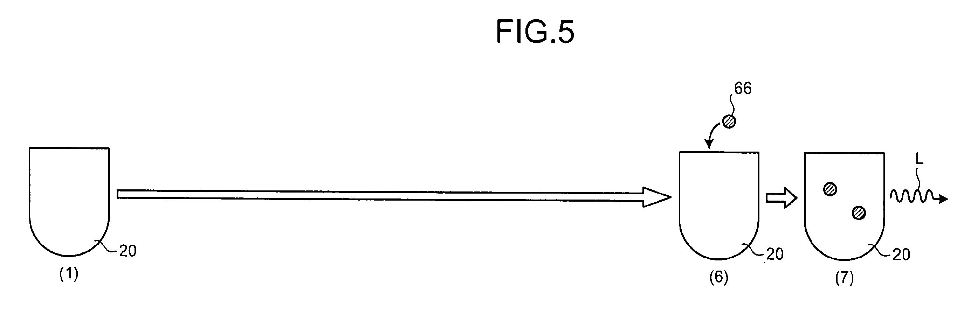

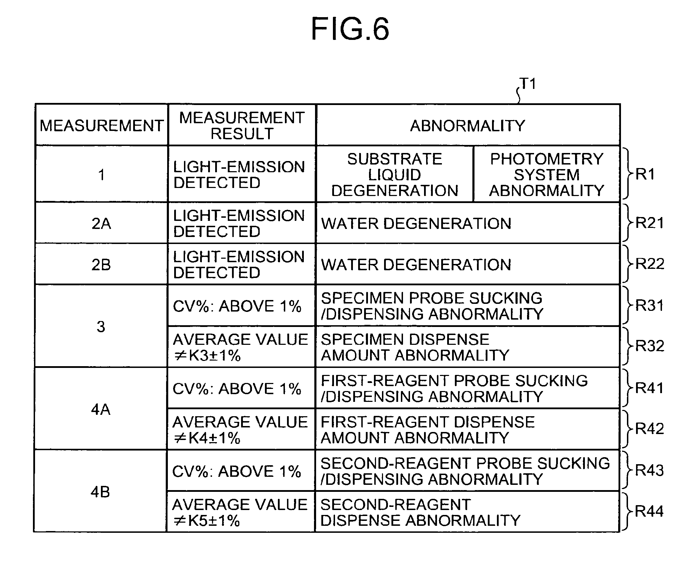

The abnormality-identifying measurement 1 is described with reference to FIGS. 3 and 5. FIG. 6 is an illustration of the abnormality-identifying measurement 1 shown in FIG. 3. The abnormality-identifying measurement 1 eliminates the first-reagent dispense process, the specimen dispense process, the first BF cleaning process, the second-reagent dispense process, and the second BF cleaning process of the normal analysis. As shown in FIG. 3 and a portion (6) of FIG. 5, in order to identify the degeneration of the substrate liquid, the substrate injection process, which injects the substrate liquid containing the enzyme 66 into the empty cuvette 20, is performed (Step S16). Further, as shown in (7) of FIG. 5, the measurement process, which measures the light emission from the substrate liquid, is performed (Step S17).

The abnormality-identifying process in the abnormality-identifying measurement 1 is described. The identifying unit 45 performs the abnormality-identifying process with reference to a table T1 which is stored in the storage unit 46 and illustrated in FIG. 5 as the predetermined acceptable range. The acceptable range is determined based on the measurement result which is previously obtained by the analyzer functioning normally, for each of the abnormality-identifying measurement processes. The table T1 shows contents of abnormalities which can be identified in each of the abnormality-identifying measurements based on the acceptable range.

The normal substrate liquid itself does not emit light more than light of a natural decay process. However, when the substrate liquid is degenerated, or the vessel containing the substrate liquid is contaminated with an external pollutant, the substrate liquid emits more light than the light of the natural decay process, and thus the light emission becomes abnormal. As shown in a field R1 corresponding to the abnormality-identifying measurement 1 in the table T1, when the abnormal light emission is not detected according to the measurement result of the abnormality-identifying measurement process 1, the identifying unit 45 determines that there is no abnormality in the substrate liquid which is used for the substrate injection process. On the other hand, when the abnormal light emission, which is stronger than the light of natural decay process, is detected according to the measurement result of the abnormality-identifying measurement process 1, the identifying unit 45 determines that the substrate liquid which is used for the substrate injection process is degenerated or that there is a photometry abnormality in the photometry system 31.

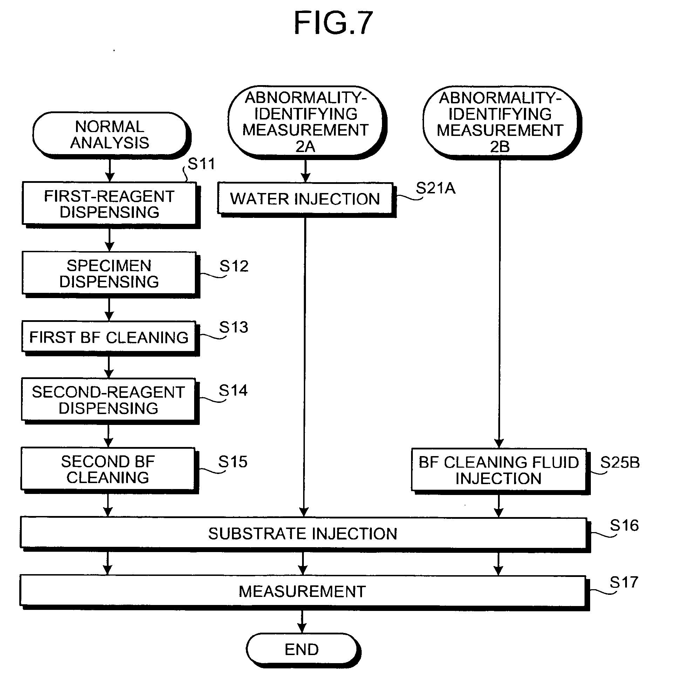

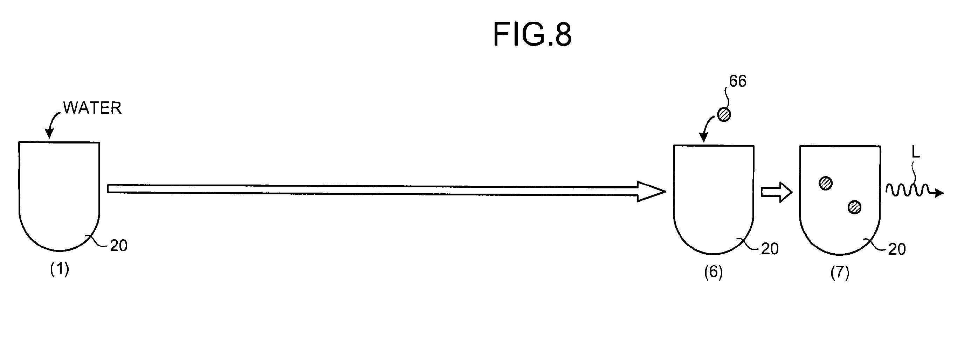

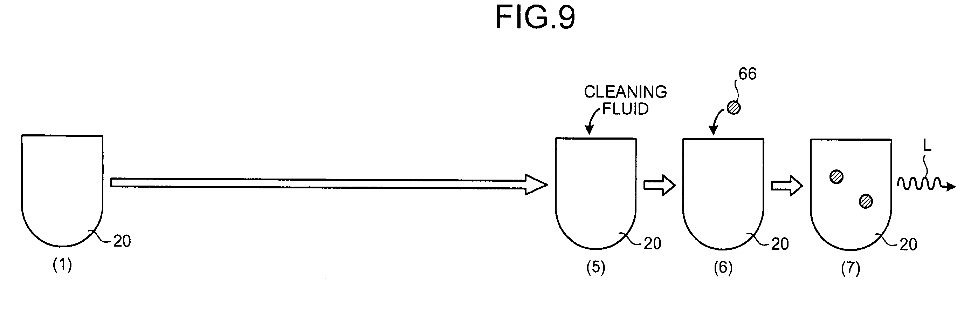

The following describes the abnormality-identifying measurement 2A for identifying the degeneration of the water, which is used as the diluted solution or the like for the reagent or the like, and the abnormality-identifying measurement 2B for identifying the degeneration of the cleaning liquid which is diluted with water for the BF cleaning process, with reference to FIGS. 7 to 9. FIG. 7 shows procedures of the abnormality-identifying measurements 2A, 2B. FIG. 7 also shows the normal analysis, which is usually performed on the specimen, along with the abnormality-identifying measurements 2A, 2B. FIG. 8 is an illustration of the abnormality-identifying measurement 2A shown in FIG. 7. FIG. 9 is an illustration of the abnormality-identifying measurement 2B shown in FIG. 7.

The abnormality-identifying measurement 2A is described. In the abnormality-identifying measurement 2A, as shown in FIG. 7 and a portion (1) of FIG. 8, a water injection process, which injects water whose abnormality is to be identified into the empty cuvette 20, is performed (Step S21A). The water injection process, instead of the first-reagent dispense process of the normal analysis, is performed in order to identify whether the water is degenerated. The abnormality-identifying measurement 2A eliminates the specimen dispense process, the first BF cleaning process, the second-reagent dispense process, and the second BF cleaning process of the normal analysis. In the abnormality-identifying measurement 2A, as shown in (6) of FIG. 8, the substrate injection process, which injects the substrate liquid containing the enzyme 66 which is a reactant, is performed (Step S16). Further, as shown in (7) of FIG. 8, a measurement process, which measures the light emission from the liquid in the cuvette 20, is performed (Step S17).

The abnormality-identifying process of the abnormality-identifying measurement 2A is described. When the substrate liquid is injected into water which is not degenerated, the light emitted therefrom is not stronger than light of the natural decay process. On the other hand, when water is degenerated, the light emitted therefrom is stronger than the light of the natural decay process as the enzyme contained in the substrate liquid is reacted. Specifically, when the water is degenerated due to propagation of bacteria or incorporation of an external pollutant in the vessel containing the water, the bacteria and the external pollutant are reacted with the enzyme in the substrate liquid, resulting in the abnormal light emission of the water which is stronger than the light emission of the natural decay process. As shown in a field R21 corresponding to the abnormality-identifying measurement 2A of the table T1 in FIG. 6, when the abnormal light emission, which is stronger than light emission of the natural decay process, is not detected according to the measurement result of the abnormality-identifying measurement process 2A, the identifying unit 45 determines that there is no abnormality in the water which is used for the analyzer 1. On the other hand, when the abnormal light emission, which is stronger than light emission of the natural decay process, is detected according to the measurement result of the abnormality-identifying measurement process 2A, the identifying unit 45 determines that the water used for the analyzer 1 is degenerated.

The abnormality-identifying measurement 2B is described. As shown in FIG. 7 and a portion (5) of FIG. 9, in order to identify the degeneration of the cleaning fluid used for the BF cleaning process, the abnormality-identifying measurement 2B eliminates the first-reagent dispense process, the specimen dispense process, the first BF cleaning process, and the second-reagent dispense process of the normal analysis. Instead of the second BF cleaning process of the normal analysis, the BF cleaning fluid injection process, which injects the cleaning fluid whose abnormality is to be identified into the empty cuvette 20, is performed (Step S25B). As shown in (6) of FIG. 9, in the abnormality-identifying measurement 2B, the substrate injection process is performed similarly to the normal analysis; i.e., the substrate liquid containing the enzyme 66 which is a reactant is injected (Step S16). Further, as shown in (7) of FIG. 9, the measurement process, which measures the light emission from the liquid in the cuvette 20, is performed (Step S17).

The abnormality-identifying process in the abnormality-identifying measurement 2B is described. Similarly to the above, when the substrate liquid is injected into the cleaning fluid which contains normal water, the light emission therefrom is not stronger than that of the natural decay process. When the water used for the cleaning fluid is degenerated due to the propagation of bacteria or the incorporation of the external pollutant, the water is reacted with the enzyme contained in the substrate liquid, resulting in the abnormal light emission, which is stronger than that of the natural decay process. Thus, as shown in a field R22 corresponding to the abnormality-identifying measurement 2B of the table T1 in FIG. 6, when the abnormal light emission, which is stronger than that of the natural decay process, is not detected according to the measurement result of the abnormality-identifying measurement process 2B, the identifying unit 45 determines that there is no abnormality in the cleaning fluid used for the BF cleaning process. On the other hand, when the abnormal light emission, which is stronger than that of the natural decay process, is detected according to the measurement result of the abnormality-identifying measurement 2B, the identifying unit 45 determines that the cleaning fluid used for the BF cleaning process is degenerated.

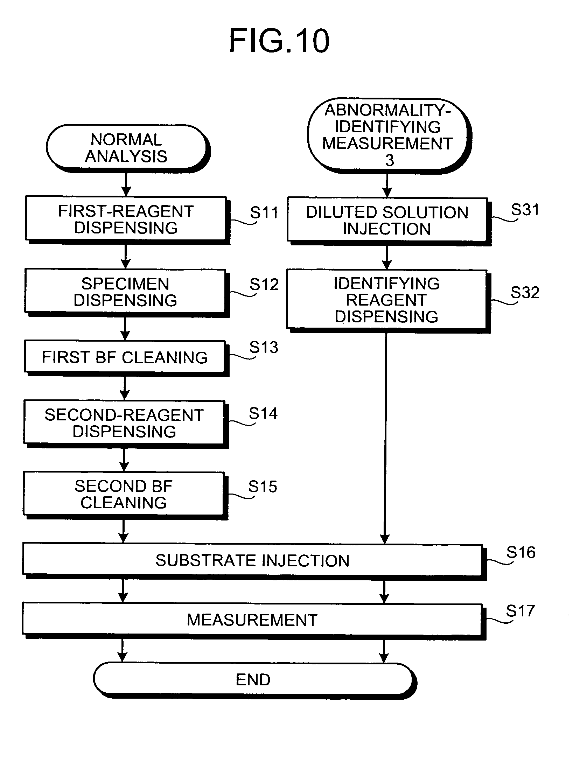

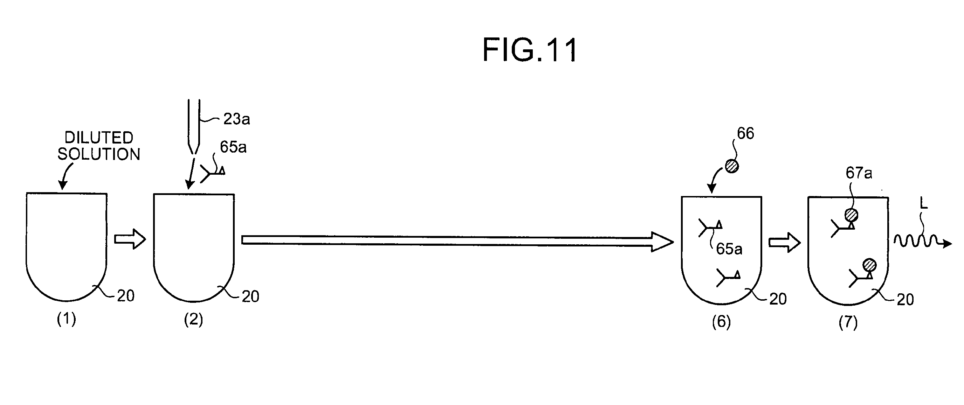

The following describes the abnormality-identifying measurement 3, of the abnormality-identifying measurements, for identifying an abnormality of the specimen dispense/transfer system which dispenses specimen, with reference to FIGS. 10 and 11. The abnormality-identifying measurement 3 uses an identifying reagent. The identifying reagent contains a predetermined amount of a labeled antibody 65a which emits light when reacted with the enzyme 66 contained in the substrate liquid. FIG. 10 shows a procedure of the abnormality-identifying measurement 3. FIG. 10 also shows the normal analysis, which is usually performed on the specimen, along with the abnormality-identifying measurement 3. FIG. 11 is an illustration of the abnormality-identifying measurement 3 shown in FIG. 10.

In the abnormality-identifying measurement 3, as shown in FIG. 10 and a portion (1) of FIG. 11, a diluted solution injection process, which injects a predetermined amount of diluted solution to prevent the liquid in the cuvette 20 from splashing due to lack of the liquid amount in the stir system, is performed (Step S31). The abnormality-identifying measurement 3 eliminates the specimen dispense process of the normal analysis. Instead, an identifying reagent injection process, which injects a predetermined amount of the identifying reagent containing the labeled antibody 65a into the cuvette 20 by the probe 23a of the specimen dispense/transfer system 23, is performed (Step S32). Further, the abnormality-identifying measurement 3 eliminates the first BF cleaning process, the second-reagent dispense process, and the second BF cleaning process of the normal analysis. As shown in (6) of FIG. 11, the substrate injection process, which injects the substrate liquid containing the enzyme 66 which is a reactant, is performed (Step S16). Further, as shown in (7) of FIG. 11, the measurement process, which measures an amount of light emitted from a reacted substance 67a obtained from the reaction of the labeled antibody 65a and the enzyme 66, is performed (Step S17).

The abnormality-identifying process in the abnormality-identifying measurement 3 is described. In the abnormality-identifying process, the identifying unit 45 calculates an average value and a dispersion value of the plural light-emission amounts which are obtained by repeating the abnormality-identifying measurement 3, i.e., repeating the diluted solution injection process, the identifying reagent injection process, the substrate injection process, and the measurement process of the abnormality-identifying measurement 3 plural times. The identifying unit 45 identifies the contents of the abnormality in the specimen dispense/transfer system 23 based on the calculated average value and dispersion value. The dispersion value of the light-emission amounts is CV %, and obtained by dividing a standard deviation of the measurement result of the plural light-emission amounts by the average value of the light-emission amounts.

Usually, when the predetermined amount of the identifying reagent is dispensed to the cuvette 20, the enzyme 66 is reacted with the labeled antibody 65a in the predetermined amount of the identifying reagent, resulting in the predetermined amount of the light emission to be measured. When the dispersion value (CV %) is high, however, the sucked amount and the discharged amount of the specimen by the probe 23a of the specimen dispense/transfer system 23 are considered inconsistent among dispense processes. The description below supposes, as an example, that acceptable range of CV % is set lower than 1 %, which is the condition that the output measurement result can be used for clinical treatment. In this case, when calculated CV % is lower than 1%, the identifying unit 45 determines that there is no abnormality in the dispense process performed by the specimen dispense/transfer system 23, as shown in a field R31 corresponding to the abnormality-identifying measurement 3 of the table T1 in FIG. 6. On the other hand, when CV % is higher than or equal to 1%, the identifying unit 45 determines that there is a sucking/discharging abnormality, which causes fluctuation in the sucking/discharging amount, in the probe 23a of the specimen dispense/transfer system 23, as shown in the field R31 of the table T1.

When the average value of the light-emission amount is different from the predetermined light-emission amount to be measured normally, the specimen amount dispensed from the specimen dispense/transfer system 23 is different from the specimen amount to be dispensed normally. Thus, it is considered that the specimen dispense/transfer system 23 fails to control the dispense amount properly. The following description supposes, as an example, that acceptable range of the average value of the light-emission amount is set as ±1 % of the light-emission amount K3 corresponding to the predetermined amount of the identifying reagent which is dispensed in the abnormality-identifying measurement 3, which is the condition that the output measurement result can be used for clinical treatment. In this case, when the average value of the light-emission amount is within ±1 % of K3, the identifying unit 45 determines that there is no abnormality in the specimen dispense/transfer system 23 as shown in a field R32 corresponding to the abnormality-identifying measurement 3 of the table T1 in FIG. 6. On the other hand, when the average value of the light-emission amount is not within ±1 % of K3, the identifying unit 45 determines that there is an abnormality in the dispense amount control of the specimen dispense/transfer system 23 as shown in the field R32 of the table T1.

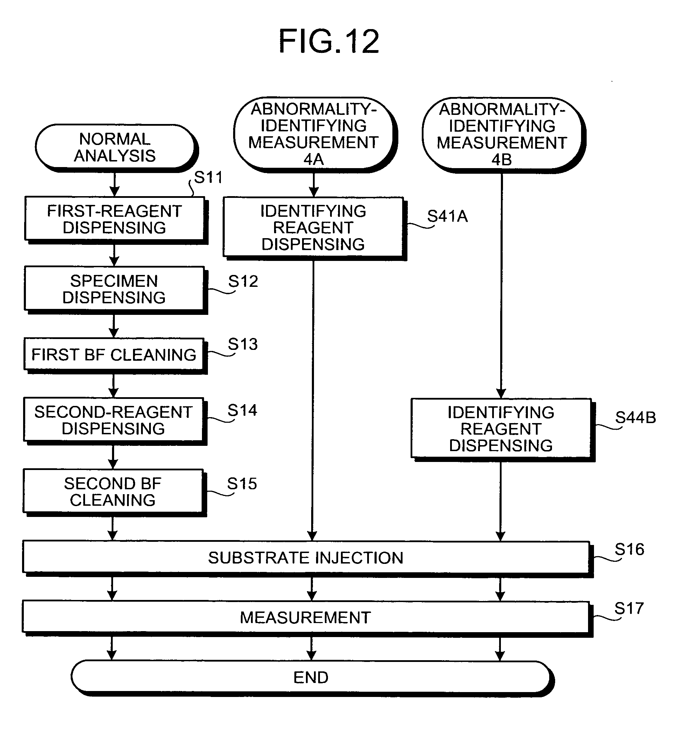

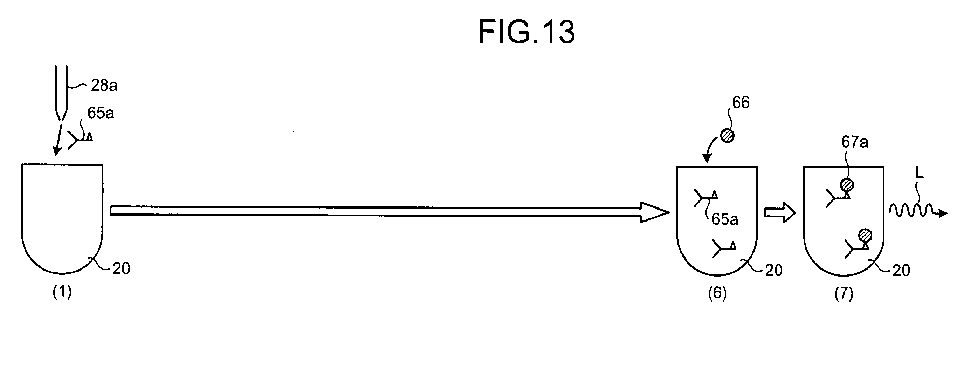

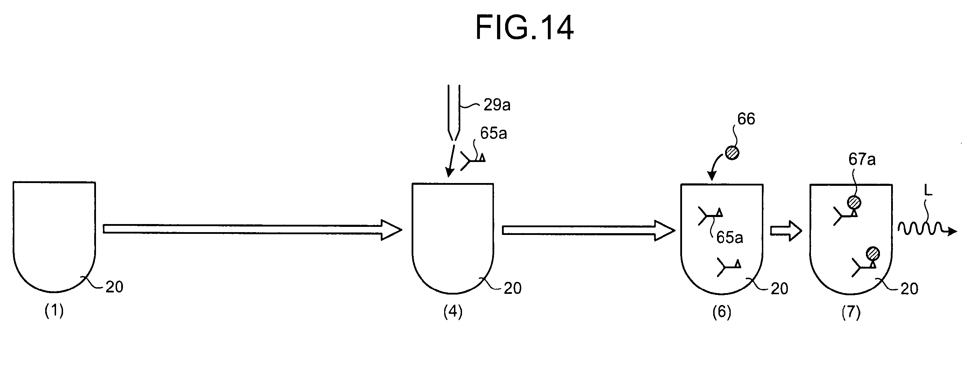

The abnormality-identifying measurements 4A, 4B, of the abnormality-identifying measurements, for identifying an abnormality in the first-reagent dispense/transfer system 28 and the second-reagent dispense/transfer system 29 are described with reference to FIGS. 12 to 14. Similarly to the abnormality-identifying measurement 3, the abnormality-identifying measurements 4A, 4B use the labeled antibody 65a, which emits light when reacted with the enzyme 66 contained in the substrate liquid, as the identifying reagent. FIG. 12 shows procedures of the abnormality-identifying measurements 4A, 4B. FIG. 12 shows the normal analysis, which is usually performed on the specimen, with the abnormality-identifying measurements 4A, 4B. FIG. 13 is an illustration of the abnormality-identifying measurement 4A shown in FIG. 12. FIG. 14 is an illustration of the abnormality-identifying measurement 4B shown in FIG. 12.

As shown in FIG. 12 and a portion of FIG. 13, in the abnormality-identifying measurement 4A, the identifying-reagent dispense process, instead of the first-reagent dispense process of the normal analysis, is performed; i.e., a predetermined amount of the identifying reagent containing the labeled antibody 65a is dispensed into the cuvette 20 by the probe 28a of the first-reagent dispense/transfer system 28 (Step S41A). The abnormality-identifying measurement 4A eliminates the specimen dispense process, the first BF cleaning process, the second-reagent dispense process, and the second BF cleaning process of the normal analysis. As shown in (6) of FIG. 13, the substrate injection process, which injects the substrate liquid containing the enzyme 66 which is a reactant, is performed similarly to the normal analysis (Step S16). As shown in (7) of FIG. 13, the measurement process, which measures the light emission from the reacted substance 67a which is obtained from the reaction of the labeled antibody 65a and the enzyme 66, is performed (Step S17).

The abnormality-identifying process in the abnormality-identifying measurement 4A is described. The abnormality-identifying process calculates the average value and the dispersion value CV % of the light-emission amounts which are obtained by repeating the abnormality-identifying measurement 4A, i.e., by repeating the identifying-reagent injection process, the substrate injection process, and the measurement process of the abnormality-identifying measurement 4A plural times. The identifying unit 45 identifies the contents of the abnormality in the first-reagent dispense/transfer system 28 based on the calculated average value and dispersion value.

Usually, when a predetermined amount of the identifying reagent is dispensed into the cuvette 20, the labeled antibody 65a in the predetermined amount of the identifying reagent is reacted with the enzyme 66, and thus a predetermined amount of light is measured. When the dispersion value of light CV % is high, the sucking amount and the discharging amount of the first reagent by the probe 28a of the first-reagent dispense/transfer system 28 is considered to be dispersed among dispense processes. When calculated CV % is less than 1%, the identifying unit 45 determines that there is no abnormality in the dispense process of the first-reagent dispense/transfer system 28 as shown in a field R41 corresponding to the abnormality-identifying measurement 4A of the table T1 in FIG. 6. However, when calculated CV % is equal to or higher than 1%, the identifying unit 45 determines that there is sucking/discharging abnormality in the probe 28a of the first-reagent dispense/transfer system 28 causing fluctuation in the sucking/discharging amount as shown in the field R41 of the table T1.

When the average value of the light-emission amount is different from the predetermined light-emission amount which is to be measured usually, the dispensed amount of the first reagent by the first-reagent dispense/transfer system 28 is different from the amount of the first reagent to be dispensed usually. Thus, it is considered that the first-reagent dispense/transfer system 28 fails to control the amount of the first reagent properly. The following description supposes, as an example, that acceptable range of the average value of the light-emission amount is set as ±1 % of the light-emission amount K4 corresponding to the predetermines amount of the identifying reagent which is dispensed in the abnormality-identifying measurement 4A, which is the condition that the output measurement result can be used for the clinical treatment. In this case, when the average value of the light-emission amount is ±1 % of the light-emission amount K4, the identifying unit 45 determines that there is no abnormality in the first-reagent dispense/transfer system 28 as shown in a field R42 corresponding to the abnormality-identifying measurement 4 of the table T1 in FIG. 6. On the other hand, when the average value of the light-emission amount is not within ±1 % of the light-emission amount K4, the identifying unit 45 determines that there is an abnormality in the dispense amount control of the first-reagent dispense/transfer system 28 as shown in the field R42 of the table T1.

As shown in FIG. 12 and a portion (4) of FIG. 14, the abnormality-identifying measurement 4B eliminates the first-reagent dispense process, the specimen dispense process, and the first BF cleaning process of the normal analysis, and the identifying-reagent dispense process, instead of the second-reagent dispense process of the normal analysis, is performed; i.e., the predetermined amount of the identifying reagent which contains the labeled antibody 65a is dispensed into the cuvette 20 by the probe 29a of the second-reagent dispense/transfer system 29 (Step S44B). The abnormality-identifying measurement 4B eliminates the second BF cleaning process of the normal analysis. As shown in (6) of FIG. 14, the substrate injection process, which injects the substrate liquid containing the enzyme 66 which is a reactant, is performed similarly to the normal analysis (Step S16). Further, as shown in (7) of FIG. 14, the measurement process, which measures the light-emission amount from the reacted substance 67a obtained from the reaction of the labeled antibody 65a and the enzyme 66, is performed (Step S17).

The abnormality-identifying process in the abnormality-identifying measurement 4B is described. In the abnormality-identifying process, similarly to the abnormality-identifying measurement 4A, the average value and the dispersion value CV % of the plural light-emission amounts which are obtained by repeating the abnormality-identifying measurement 4B plural times are calculated. The identifying unit 45 identifies the contents of the abnormality in the second-reagent dispense/transfer system 29 based on the calculated average value and dispersion value.

Similarly to the abnormality-identifying process in the abnormality-identifying measurement 4A, when CV % is higher than or equal to 1%, the identifying unit 45 determines that there is a sucking/discharging abnormality, which causes fluctuation in the sucking/discharging amount, in the probe 29a of the second-reagent dispense/transfer system 29, as shown in a field R43 of the table T1. Further, similarly to the abnormality-identifying process in the abnormality-identifying measurement 4A, when the average value of the light-emission amount is not within ±1% of the light emission amount K5 corresponding to the predetermined amount of the identifying reagent which is dispensed in the abnormality-identifying measurement 4B, the identifying unit 45 determines that there is an abnormality of the dispense amount control in the second-reagent dispense/transfer system 29 as shown in a field R44 of the table T1.

As described, the analyzer 1 according to the embodiment eliminates all analysis processes but the analysis process whose abnormality is to be examined, and determines whether there is an abnormality in the dispense/transfer system or degeneration of water and the substrate liquid, based on the measurement result obtained through the analysis process whose abnormality is to be examined, and the reaction process in which the water, the substrate liquid or the predetermined reagent is reacted with the predetermined reactant. Therefore, according to the present embodiment, it is not necessary to consider abnormalities of analysis processes other than the analysis process whose abnormality is to be examined. As a result, the degeneration of the water whose abnormality is to be examined and the substrate liquid, and the abnormality in the dispense/transfer system can be properly examined. Further, according to the present embodiment, the abnormality can be identified based on the measurement result from the photometry system 31, and thus the colorimetric measurement using a spectral photometer which is not included in the analyzer is not required unlike the conventional case. According to the present embodiment, the abnormality of the analyzer can be identified properly and easily.

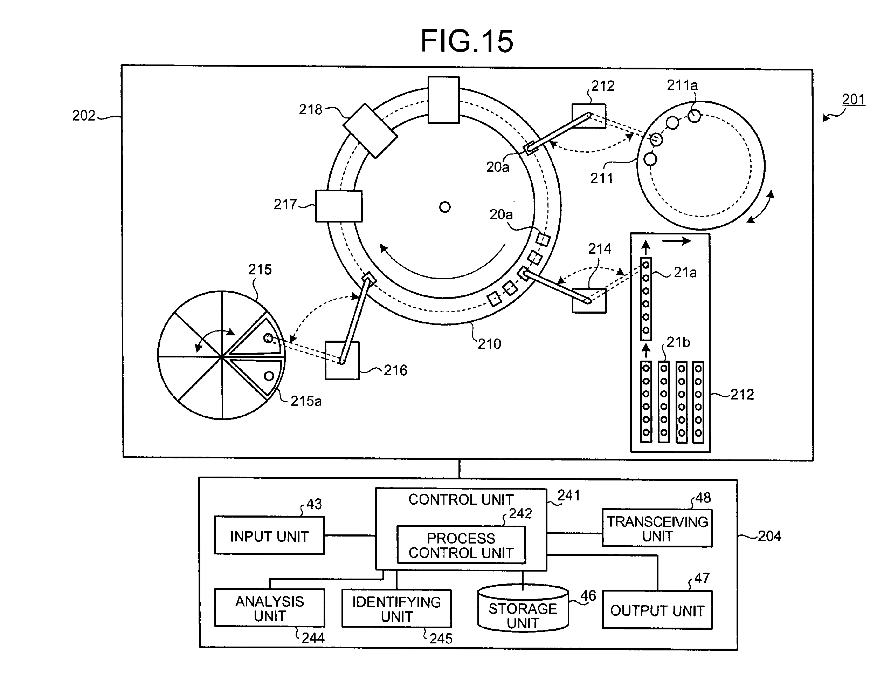

Further, the present embodiment is applicable not only to the analyzer which performs the immunological test but also to the analyzer which performs the biochemical test in which a specimen concentration is obtained by measuring absorbance of the reaction liquid in the reaction vessel. FIG. 15 is a schematic diagram of a configuration of the analysis which performs the biochemical test.

As shown in FIG. 15, an analyzer 201 which performs the biochemical test includes a measurement system 202 which includes a reaction table 210 which transfers the cuvette 20a, a first-reagent holder 211 which holds the reagent vessel 211a containing the first reagent, a first-reagent dispense/transfer system 212 which dispenses a predetermined amount of the first reagent from the reagent vessel 211a into the cuvette 20a, a specimen dispense/transfer system 214 which dispenses a predetermined amount of the specimen from the specimen vessel 21a in the specimen rack 21b which is transferred by the specimen transfer unit 212 into the cuvette 20a, a second-reagent holder 215 which holds the reagent vessel 215a containing the second reagent, a second-reagent dispense/transfer system 216 which dispenses a predetermined amount of the second reagent from the reagent vessel 215a into the cuvette 20a, a stir system 217 which stirs the liquid in the cuvette 20a, and a photometry system 218 which emits light of a predetermined wavelength toward the cuvette 20a and measures light transmitted through the cuvette 20. The analyzer 201 includes a control system 204. The control system 204 includes a control unit 241 which includes a process control unit 242 which controls each of the systems to perform the abnormality identifying process in a manner similar to that of the process control unit 42, to eliminate all analysis processes performed on a specimen to be analyzed but the analysis process whose abnormality is to be examined, and to perform a reaction process in which the predetermined reacted substance is reacted with the predetermined reagent, the input unit 43, an analysis unit 244 which analyzes the specimen concentration and the like based on the measurement result from the photometry system 218, an identifying unit 245 which identifies an abnormality of the analyzer 201, the storage unit 46, the output unit 47, and the transceiving unit 48.

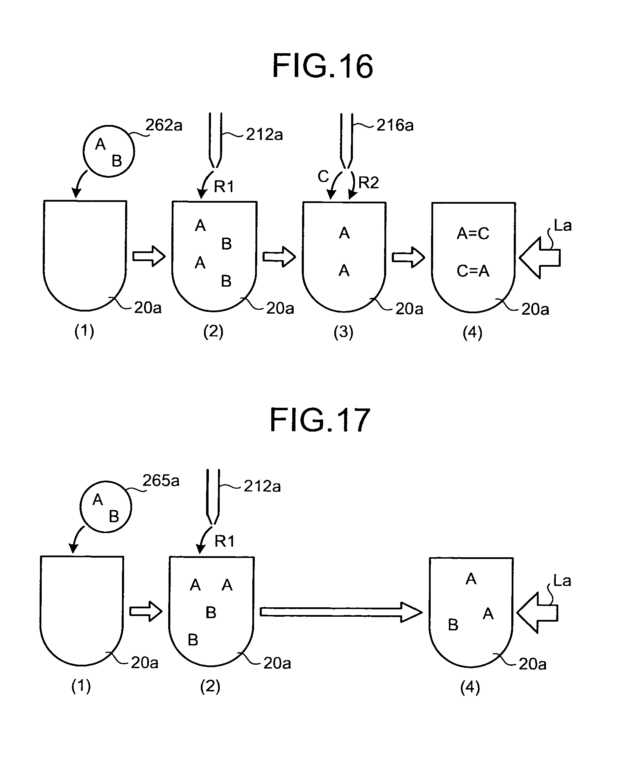

An analysis process for analyzing a concentration of "A" in a specimen 262a is described with reference to FIG. 16. As shown in FIG. 16, "A" itself to be analyzed does not absorbs light but absorbs light of a predetermined wavelength when bound with "C". The specimen 262a further includes "B" which absorbs light of the same wavelength with that of light absorbed by the bound substance of "A" and "C". Thus, as shown in (1) of FIG. 16, the specimen dispense process, which dispenses the specimen 262a into the cuvette 20a, is performed, and then, as shown in (2) of FIG. 16, the first-reagent dispense process which dispenses a first reagent R1, which removes B, into the cuvette 20a from a probe 212a of the first-reagent dispense/transfer system 212 is performed. As shown in (3) of FIG. 16, a second-reagent dispense process which dispenses "C" and a second reagent R2, which promotes reaction of "A" and "C", into the cuvette 20a from the probe 216a of the second-reagent dispense/transfer system 216 is performed. Then, as shown in (4) of FIG. 16, light La is emitted toward the cuvette 20a and absorbance measurement is performed.

In order to identify an abnormality of the first-reagent dispense/transfer system in all possible abnormalities of the analysis process shown in FIG. 16, firstly, a predetermined amount of an identifying reagent 265a, which includes a predetermined amount of "A" and "B" is dispensed as shown in (1) of FIG. 17. As shown in (2) of FIG. 17, the first-reagent dispense process, which dispenses the first reagent R1, is performed. The second reagent dispense process is eliminated, and an absorbance measurement process is performed as shown in (4) of FIG. 17. When the first-reagent dispense/transfer system 212 cannot properly dispense the predetermined amount of the first reagent R1, "B" remains in the cuvette 20a as shown in (4) of FIG. 17, and thus absorption of light of the predetermined wavelength by "B" is detected. Therefore, the identifying unit 245 can identify whether there is an abnormality in the first-reagent dispense/transfer system 212 based on whether light of the predetermined wavelength is absorbed by "B".

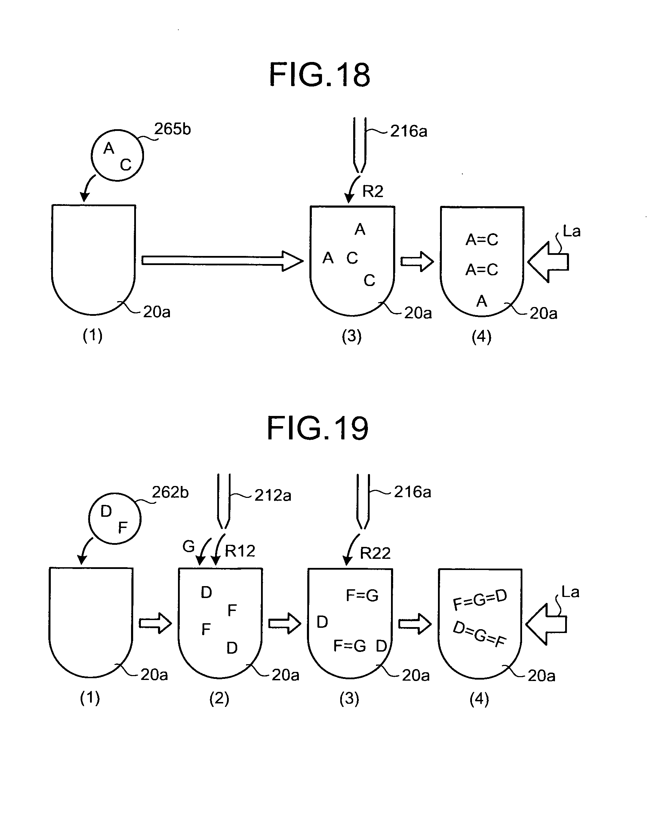

In order to identify an abnormality of the second-reagent dispense/transfer system in all possible abnormalities of the analysis process shown in FIG. 16, firstly, a predetermined amount of an identifying reagent 265b, which includes a predetermined amount of "A" and "C", is dispensed as shown in (1) of FIG. 18. The first-reagent dispense process is eliminated, and as shown in (3) of FIG. 18, the second-reagent dispense process, which dispenses the second reagent R2, is performed. As shown in (4) of FIG. 18, the absorbance measurement process is performed. When the second-reagent dispense/transfer system 216 cannot properly dispense the predetermined amount of the second reagent R2, some of "A" in the identifying reagent 265b are not bound with "C" as shown in (4) of FIG. 18, and thus obtained absorbance is different from the absorbance which is previously obtained with the identifying reagent 265b by the analyzer 201 functioning normally. Therefore, the identifying unit 245 can identify whether there is an abnormality in the second-reagent dispense/transfer system 216 based on whether the obtained absorbance is consistent with the absorbance which is obtained by the analyzer 201 functioning normally.

An analysis process for analyzing a concentration of "D" in the specimen 262b is described with reference to FIG. 19. As shown in FIG. 19, "D" itself to be analyzed does not absorb light but absorbs light of a predetermined wavelength when bound with "F". "D" can be bound with "F" by means of intermediary substance "G". As shown in (1) of FIG. 19, the specimen dispense process, which dispenses the specimen 262b into the cuvette 20a, is performed. After that, the first-reagent dispense process, which dispenses "G" and a first reagent R12 from the probe 212a of the first-reagent dispense/transfer system 212 is performed as shown in (2) of FIG. 19. The first reagent R12 facilitates reaction of "F" and "G", and "F" and "G" are bound to generate "F=G". As shown in (3) of FIG. 19, the second-reagent dispense process, which dispenses a second reagent R22 from the probe 216a of the second-reagent dispense/transfer system 216, is performed. The second reagent R22 facilitates reaction of "D" and "F=G". Then, as shown in (4) of FIG. 19, the light La is emitted toward the cuvette 20a, and the absorbance measurement is performed.

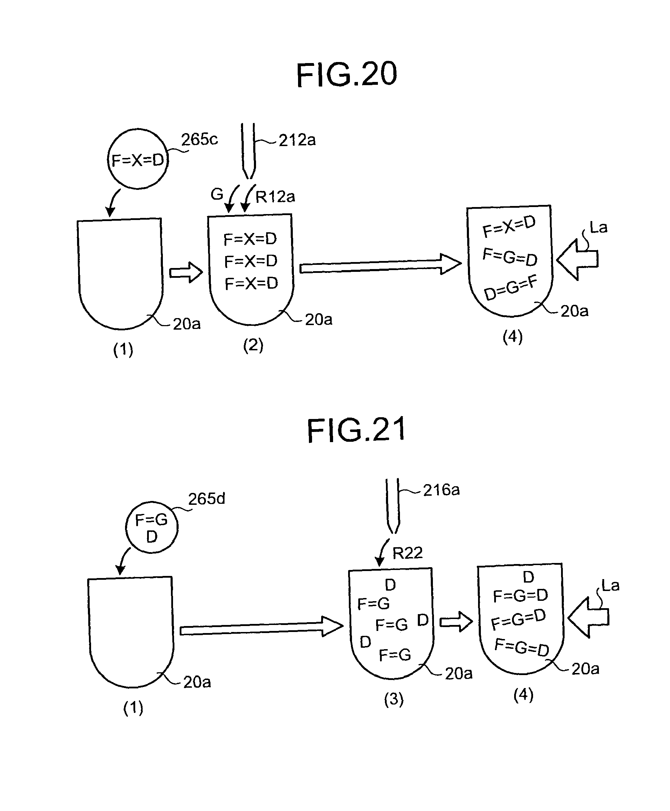

In order to identify an abnormality in the first-reagent dispense/transfer system in all possible abnormalities of the analysis process shown in FIG. 19, firstly, a predetermined amount of an identifying reagent 265c, which includes a predetermined amount of "F=X=D", i.e., bound substance of "D" and "F" with intermediary substance "X", is dispensed as shown in (1) of FIG. 20. Here, "X" is replaceable with "G". As shown in (2) of FIG. 20, the first-reagent dispense process, which dispenses "G" and a predetermined amount of a reagent R12a, is performed. The reagent R12a facilitates replacement of "X" by "G", and as a result, "X" in "F=X=D" is replaced by "G" to generate "F=G=D". The second-reagent dispense process is eliminated, and as shown in (4) of FIG. 20, the absorbance measurement process is performed. When the first-reagent dispense/transfer system 212 cannot properly dispense the reagent R12a, "F=X=D" remains in the cuvette 20a, and the obtained absorbance is different from the absorbance which is previously obtained with the identifying reagent 265c by the analyzer 201 functioning normally. Therefore, the identifying unit 245 can identify whether there is an abnormality in the first-reagent dispense/transfer system 212 based on whether the obtained absorbance is consistent with the absorbance obtained by the analyzer 201 functioning normally.

In order to identify an abnormality in the second-reagent dispense/transfer system in all possible abnormalities of the analysis process shown in FIG. 19, firstly, a predetermined amount of an identifying reagent 265d, which includes a predetermined amount of "F=G" and "D", is dispensed as shown in (1) of FIG. 21. The first-reagent dispense process is eliminated, and as shown in (3) of FIG. 21, the second-reagent dispense process, which dispenses the second reagent R22, is performed. As shown in (4) of FIG. 21, the absorbance measurement process is performed. When the second-reagent dispense/transfer system 216 cannot properly dispense the predetermined amount of the second reagent R22, some "F=G" in the identifying reagent 265d are not bound with "D" as shown in (4) of FIG. 21, and the obtained absorbance is different from the absorbance which is previously obtained with the identifying reagent 265d by the analyzer 201 functioning normally. Therefore, the identifying unit 245 can identify whether there is an abnormality in the second-reagent dispense/transfer system 216 based on whether the obtained absorbance is consistent with the absorbance previously obtained by the analyzer 201 functioning normally. As described, the analyzer 201 which performs the biochemical test can identify whether there is an abnormality in the dispense/transfer system easily and properly, using the predetermined reagent for identifying abnormalities.

The analyzer described in the above embodiment can be realized by a computer system such as a personal computer and a workstation, which executes predetermined programs. The computer system reads out programs stored in a predetermined storage medium to realize the procedure of the analyzer. The predetermined storage medium can be "a portable physical medium" such as a flexible disk (FD), a CD-ROM, an MO disk, a DVD disk, a magneto-optical disk, and an IC card, or a "communication medium" such as a hard disk drive (HDD), which is stored inside or outside the computer system, and temporarily stores programs therein for transmission of the programs, or any storage medium which can store computer-readable programs therein. The computer system obtains programs from other computer system which is connected therewith via a network, and executes the obtained programs to realize the procedure of the analyzer.

### INDUSTRIAL APPLICABILITY

As described above, the analyzer according to the present invention can be applied to a medical analyzer which does not include a colorimetric measurement unit, and in particular, is useful for identifying an abnormality of the analyzer easily and immediately.

## Claims

1. An abnormality-identifying method for identifying an abnormality of an analyzer which analyzes a specimen based on optical characteristics, wherein
all predetermined analysis processes to be performed on the specimen but an analysis process whose abnormality is to be examined are eliminated; and
the abnormality of the analyzer is identified based on a measurement result which is obtained through the analysis process whose abnormality is to be examined and a reaction process in which a substance whose abnormality is to be identified or a predetermined reagent is reacted with a predetermined reactant.

2. The abnormality-identifying method according to claim 1, comprising:
a first injection step of injecting a predetermined amount of the substance whose abnormality is to be identified or a predetermined amount of the reagent into a reaction vessel by a liquid injection system;
a second injection step of injecting the reactant which is then reacted with the substance whose abnormality is to be identified or the reagent, to thereby make the substance whose abnormality is to be identified or the reagent show predetermined optical characteristics;
a measuring step of optically measuring a reaction liquid in the reaction vessel; and
an identifying step of determining that there is an abnormality in the substance whose abnormality is to be identified or the liquid injection system when a measurement result of the measurement step is not within acceptable range determined based on the measurement result previously obtained by the analyzer which functions normally.

3. The abnormality-identifying method according to claim 2, wherein
in the first injection step, the substance whose abnormality is to be identified, i.e., a liquid which is, when degenerated, shows abnormal light emission when reacted with the reactant is injected;
in the measurement step, the abnormal light emission resulting from the reaction between the substance whose abnormality is to be identified and the reactant injected in the second injection step is detected; and
in the identifying step, it is determined that the substance whose abnormality is to be identified is degenerated when the abnormal light emission is detected in the measurement step.

4. The abnormality-identifying method according to claim 2, wherein
in the first injection step, the reagent which emits light when reacted with the reactant is injected;
in the measurement step, the light-emission amount from the reagent which is reacted with the reactant injected in the second injection step is measured; and
in the identifying step, it is determined that there is an abnormality in the liquid injection system when the light-emission amount measured in the measurement step is not within the acceptable range.

5. The abnormality-identifying method according to claim 4, wherein
in the identifying step, contents of the abnormality in the liquid injection system are identified based on an average value and a dispersion value of the light-emission amount which are obtained by repeating the first injection step, the second injection step, and the measurement step plural times.

6. An analyzer which analyzes a specimen based on optical characteristics, wherein
all predetermined analysis processes to be performed on the specimen but an analysis process whose abnormality is to be examined are eliminated; and
the abnormality of the analyzer is identified based on a measurement result which is obtained through the analysis process whose abnormality is to be examined and a reaction process in which a substance whose abnormality is to be identified or a predetermined reagent is reacted with a predetermined reactant.

7. The analyzer according to claim 6, comprising:
a first injection unit which injects a predetermined amount of the substance whose abnormality is to be identified or a predetermined amount of the reagent into the reaction vessel;
a second injection unit which injects the reactant which is reacted with the substance whose abnormality is to be identified or with the reagent to thereby make the substance whose abnormality is to be identified or the reagent show predetermined optical characteristics;
a measurement unit which optically measures the reaction liquid in the reaction vessel; and
the identifying unit which determines that there is an abnormality in the substance whose abnormality is to be identified or in the liquid injection system when the measurement result from the measurement unit is not within the acceptable range determined based on the measurement result previously obtained by the analyzer which functions normally.

8. The analyzer according to claim 7, wherein
the first injection unit injects the substance whose abnormality is to be identified, i.e., the liquid which is, when degenerated, reacted with the reactant and causes abnormal light emission;
the measurement unit detects the abnormal light emission of the substance whose abnormality is to be identified which is reacted with the reactant injected by the second injection unit; and
the identifying unit determines that the substance whose abnormality is to be identified is degenerated when the abnormal light emission is detected by the measurement unit.

9. The analyzer according to claim 7, wherein
the first injection unit injects the reagent which emits light when reacted with the reactant;
the measurement unit measures an amount of the light emission emitted from the reagent which is reacted with the reactant injected by the second injection unit; and
the identifying unit determines that there is an abnormality in the first injection unit when the amount of light emission measured by the measurement unit is not within the acceptable range.

10. The analyzer according to claim 9, wherein
the identifying unit identifies contents of the abnormality in the first injection unit based on the average value and the dispersion value of the light-emission amount which are obtained by repeating each process of the first injection unit, the second injection unit, and the measurement unit plural times.
